# EUROPEAN PATENT APPLICATION

(11) **EP 1 708 009 A2**
(43) Date of publication of application: **04.10.2006**
(21) Application number: 06112177.8
(22) Date of filing: 03.04.2006
(51) Int. Cl.: G02B 27/09

(54) **Optical system for projecting a line of illumination from an array of lasers**

(30) Priority: 01.04.2005 US 667242
(71) Applicant: AGFA CORPORATION, Ridgefield Park, NJ 07660-2199 (US)
(72) Inventor: Sagan, Stephen, Lexington, MA 02420 (US)
(74) Representative: Verbrugghe, Anne Marie L.

(57) **Abstract**

An optical system is disclosed for projecting a line of laser illumination. The optical system includes a plurality of laser diodes arranged in a linear array, a first anamorphic lens structure (20) that at least substantially collimates a fast axis of illumination from the plurality of laser diodes, a second anamorphic lens structure (24) that scales the fast axis illumination from the first anamorphic lens structure, and a diffuser (26) which diffuses the light along the slow axis. The system also comprises a field lens for condensing the expanded and diffused beams onto a spatial light modulator of a display.
The system can also contain a waveplate (22) between the anamorphic lens structures.

## Description

### FIELD OF THE INVENTION

The invention generally relates to imaging systems, and relates in particular to imaging systems that employ a line of laser illumination.

### BACKGROUND OF THE INVENTION

Many conventional imaging systems that provide a line of laser illumination, include a fast axis (FA) lens for scaling the illumination along the fast axis (the line width direction), and an array of micro lenses to homogenize and scale the image along the slow axis (the line length direction).

For example, U.S. Patent No. 6,494,371 discloses a diode-laser light projector for illuminating a linear array of light modulators. The system is arranged to focus fast axis diverging rays of the diode-lasers in a focal plane perpendicular to the longitudinal axis, and arranged to form the slow axis diverging rays of the diode-lasers into a plurality of bundles of parallel rays, one for each diode-laser. The optical system thereby causes light from the diode-lasers to be formed into a line of light in the focal plane. Although the system collimates the light in the fast axis direction, the system does not provide for scalability in the fast axis direction.

U.S. Patent No. 6,773,142 discloses a system for projecting a line of light from a diode-laser array onto a light modulator. The system also includes a first anamorphic lens that provides positive optical power in the fast axis direction, and provides zero optical power in the slow axis direction. The system also includes first and second microlens arrays that each provide zero optical power in the fast axis direction yet provide positive optical power in the slow axis direction to cause the array of spaced-apart emitting apertures to appear to be a single emitting aperture. The system requires, however, that a scaled virtual image be provided to the first fast axis anamorphic lens, and that the cylinder power in the macro relay the fast axis illumination to the proper line width.

There is a need therefore, for a more efficient and economical optical system for projecting a line of light from an array of lasers.

### SUMMARY OF THE INVENTION

The invention provides an optical system for projecting a line of laser illumination in accordance with an embodiment. The optical system includes a plurality of laser diodes arranged in a linear array, a first anamorphic lens structure that at least substantially collimates a fast axis of illumination from the plurality of laser diodes, and a second anamorphic lens structure that scales the fast axis illumination from the first anamorphic lens structure.

In accordance with another embodiment, the invention provides an optical system for projecting a line of laser illumination that includes a plurality of laser diodes arranged in a linear array, a first anamorphic lens structure that collimates a fast axis of illumination from the plurality of laser diodes, and a second anamorphic lens structure that scales the fast axis illumination from the first anamorphic lens structure.

In accordance with a further embodiment, the invention provides an optical system for projecting a line of laser illumination that includes a plurality of laser diodes arranged in a linear array, a first anamorphic lens structure that collimates a fast axis of illumination from the plurality of laser diodes, a waveplate that rotates the polarization of illumination from the first anamorphic lens structure, a second anamorphic lens structure that scales the fast axis illumination from the waveplate and that provides total internal reflection in the slow axis direction, and a slow axis diffuser that diffuses illumination from the second anamorphic lens structure.

### BRIEF DESCRIPTION OF THE DRAWINGS

The following description may be further understood with reference to the accompanying drawings in which:
Figure 1 shows an illustrative diagrammatic isometric view of an optical system in accordance with an embodiment of the invention;
Figure 2 shows an illustrative diagrammatic isometric view of the source illumination system of Figure 1;
Figure 3 shows an illustrative diagrammatic view of the optical system of Figure 1 along the slow axis;
Figure 4 shows an illustrative diagrammatic view of the source illumination system of Figure 1 along the fast axis;
Figure 5 shows an illustrative diagrammatic view of the source illumination system of Figure 1 along the slow axis;
Figure 6 shows an illustrative diagrammatic isometric view of an optical system in accordance with another embodiment of the invention;
Figure 7 shows an illustrative diagrammatic isometric view of the source illumination system of Figure 6;
Figure 8 shows an illustrative diagrammatic view of the optical system of Figure 6 along the slow axis;
Figure 9 shows an illustrative diagrammatic view of the source illumination system of Figure 6 along the fast axis; and
Figure 10 shows an illustrative diagrammatic view of the source illumination system of Figure 6 along the slow axis;
The drawings are shown for illustrative purposes only.

### DETAILED DESCRIPTION OF THE INVENTION

A method is described hereafter for projecting a line of light of a prescribed length and width with specified power and line width uniformities, as well as a telecentric exit pupil that also allows for modularity at the lenses bar level with a second configuration for off-axis (dark field) illumination.

Systems of various embodiments of the invention provide for the collimation of the FA at the bar level (with a traditional FAC lens of approximately 1 mm), adding an FA scaling anamorphic beam expander (a simple thick convex-concave cylinder element or separate more complicated elements), followed by a rotationally symmetric macro lens to image the FA to specific line width while collimating the illumination exit pupil (for telecentricity) and provide a line length defined by the SA divergence at the exit pupil.

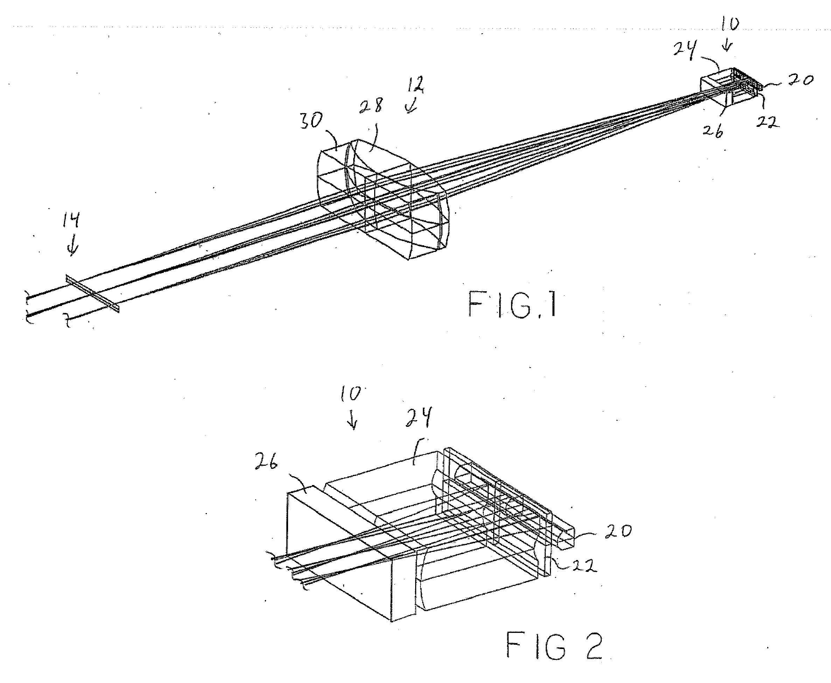

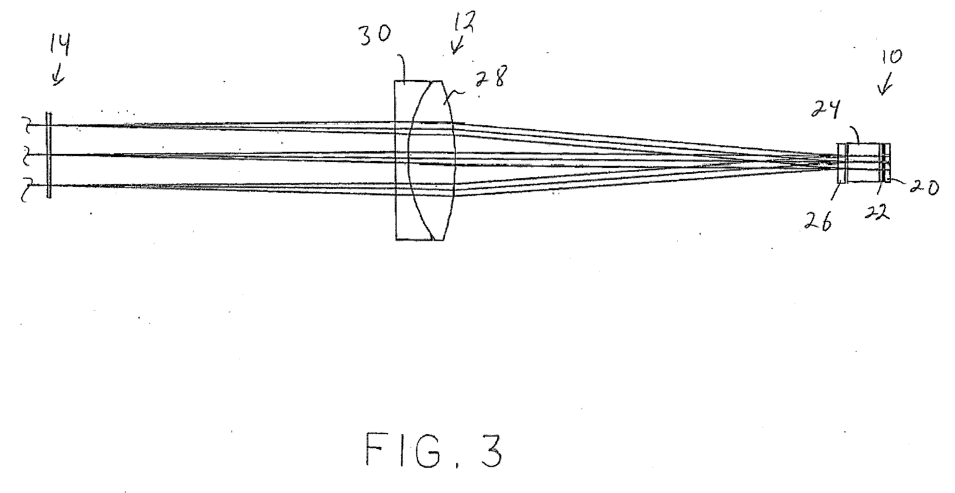

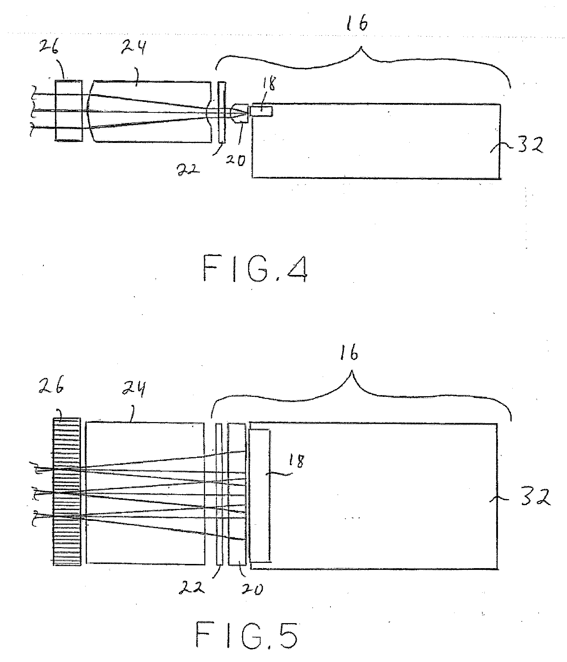

For example, as shown in Figures 1 - 3, a system in accordance with an embodiment of the invention includes an illumination source system 10, a rotationally symmetric macro lens group 12, and provides an illuminated line 14 at a light modulator. As further shown in Figures 4 and 5, the illumination source 10 includes a substantially collimating laser illumination module 16 that includes a laser bar assembly 18 and laser bar assembly support structure 32, as well as a fast axis collimator 20 and a waveplate window 22. The illumination source 10 also includes an anamorphic beam expander 24 (including one or more anamorphic or cylinder elements) and a slow axis diffuser 26 such as a Fly's eye or Department of Defense Fly's eye or DOE optional slow axis far field. The term "anamorphic" means relating to, having or producing different optical imaging effects along mutually perpendicular radii (for a surface), or along mutually perpendicular axes (for an optical system).

The substantially collimated FA lensed bar provides a clean interface for the sub illumination module (IM) specification. The second anamorphic element or group expands the FA for the proper scaling when used with the macro group and provides adjustment capability for alignment and integration of the IM into a line illumination modulator (LIM). The laser bar (or vicinity) becomes the illumination exit pupil. The second anamorphic lens may also provide total internal reflection in the slow axis direction to the width of the laser array.

If the SA far field profile is not sufficiently uniform (top hat), an engineered homogenizer (such as a refractive fly's eye or other diffractive diffuser) is placed just after this second anamorphic element. This homogenizer then becomes the illumination exit pupil.

If the LIM is to be used as an off-axis illumination source, a pair of periscope prisms or mirror assemblies are used to split and displace the illumination exit pupil in the slow axis to create two half sized full divergence sources centered on the selected plus and minus orders of the dark field system being illuminated.

If polarization orientation is of consequence, a wave plate of appropriate thickness can be placed near the exit pupil and before the homogenizing element. The system provides that the IM interface requirements may be simplified to provide modular capability. Greater flexibility is also provided between IM source configurations. Greater flexibility is also provided between on-axis and off-axis illumination configurations. Higher yields may also be realized with use of lesser IMs for Low Cost off-axis applications.

An optical system of an embodiment of the invention, therefore, provides an on-axis illumination apparatus for projecting a line of light that includes a plurality of diode-lasers arranged in a linear diode-laser array, a first anamorphic lens to substantially collimate the fast axis, a second anamorphic lens (or group) to scale the fast axis, and a macro lens or group with positive rotationally symmetric optical power.

The optical system may also include an engineered diffuser or group located after and near the second anamorphic lens and before and one focal length from the macro lens or group. The engineered diffuser may be defined as the exit pupil emitting a uniform angular SA field and may comprise one or more arrays of micro lenses with a refractive or diffractive cylindrical or acylindrical power in the slow axis with arbitrary pitch and scale.

The optical system may further include a wave plate located after the first anamorphic lens but before the engineered diffuser to rotate the polarization to desired orientation or condition. The macro lens may be designed to minimize field curvature and other aberrations from a collimated field emitted from the exit pupil, and to generate a line image one focal length past the macro lens.

In accordance with another embodiment, systems of the invention may include a pair of folding mirrors or prisms located near the exit of the second anamorphic lens (or engineered diffuser if used) to split and displace the illumination for off-axis illumination. The spacing of the macro lens may maintain a one focal length optical path distance.

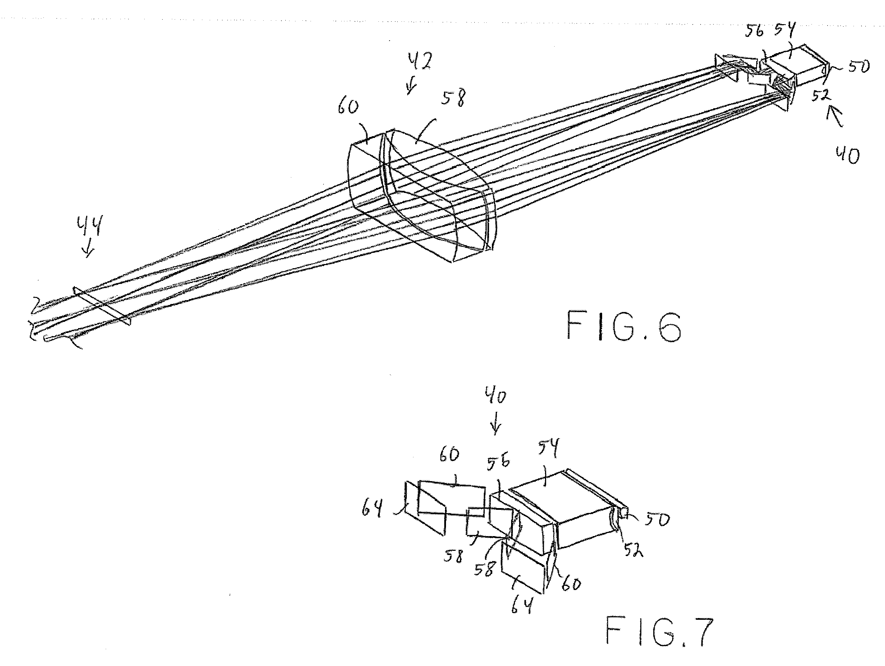

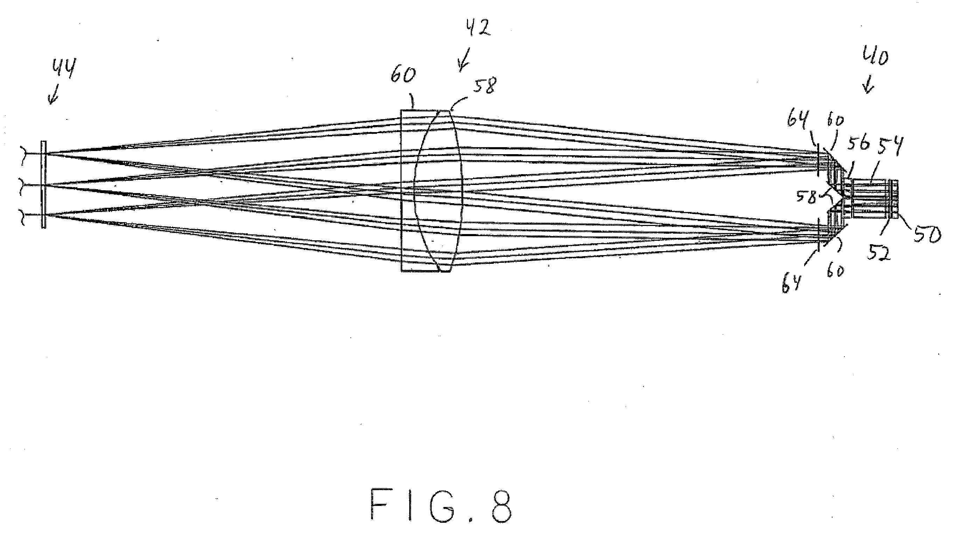

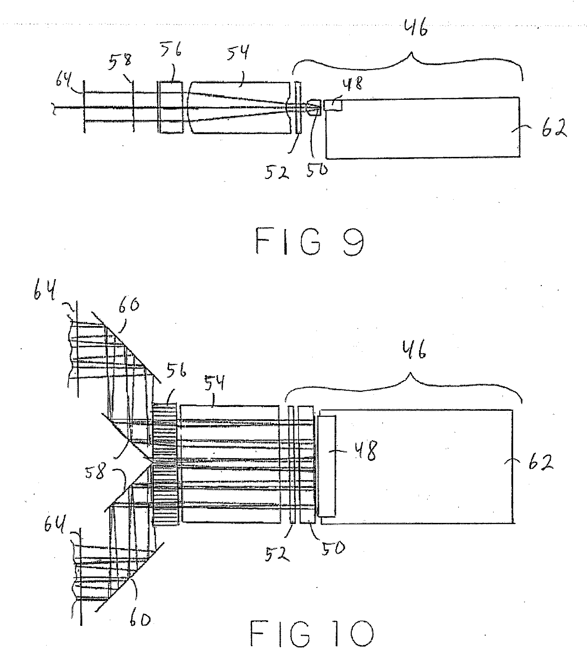

As shown in Figures 6 - 8, a system in accordance with another embodiment of the invention includes an illumination source system 40, a rotationally symmetric macro lens group 42, and provides an illuminated line 44 at a light modulator. As further shown in Figures 9 and 10, the illumination source 40 includes a substantially collimating laser illumination module 46 that includes a laser bar assembly 48 and laser bar assembly support structure 62, as well as a fast axis collimator 50 and a waveplate window 52. The illumination source 40 also includes an anamorphic beam expander 54 (including one or more anamorphic or cylinder elements) and a slow axis diffuser 56 such as a Fly's eye or Department of Defense Fly's eye or DOE optional slow axis far field. Illumination from the slow axis diffuser 56 is directed via sets of prisms 58, 60 and 64 toward the macro lens group 42 from an off axis direction as shown in Figures 6 and 8.

Those skilled in the art will appreciate that numerous modifications and variations may be made to the above disclosed embodiments without departing from the spirit and scope of the invention as claimed.

## Claims

1. An optical system for projecting a line of laser illumination, said optical system comprising:
- a plurality of laser diodes arranged in a linear array;
- a first anamorphic lens structure that at least substantially collimates a fast axis of illumination from the plurality of laser diodes;
- a second anamorphic lens structure that scales the fast axis illumination from the first anamorphic lens structure;
- a slow axis diffuser that diffuses illumination from the laser diodes along a slow axis direction; and
- a rotationally symmetric macro lens group that receives the diffused illumination and provides the line of illumination at a light modulator.

2. The optical system as claimed in claim 1, wherein said optical system further includes a wave plate that rotates the polarization of illumination from the first anamorphic lens structure.

3. The optical system as claimed in claim 1, wherein said first anamorphic lens structure is adjacent the plurality of laser diodes.

4. The optical system as claimed in claim 1, wherein said optical system provides on-axis illumination of a light modulator.

5. The optical system as claimed in claim 1, wherein said optical system provides off-axis illumination of a light modulator.

6. The optical system as claimed in claim 5, wherein said optical system further includes a plurality of prisms adjacent the slow axis diffuser.

7. The optical system as claimed in claim 1, wherein said optical system further includes a plurality of mirrors for re-directing illumination in the slow axis direction.

8. The optical system as claimed in claim 1, wherein said optical system provides fast axis collimated laser diode illumination directly to the second anamorphic lens structure.

9. An optical system for projecting a line of laser illumination, said optical system comprising:
- a plurality of laser diodes arranged in a linear array;
- a first anamorphic lens structure that collimates a fast axis of illumination from the plurality of laser diodes;
- a second anamorphic lens structure that scales the fast axis illumination from the first anamorphic lens structure; and
- a rotationally symmetric macro lens group that receives the scaled illumination and provides the line of illumination at a light modulator.

10. The optical system as claimed in claim 9, wherein said first anamorphic lens structure provides the total internal reflection in the slow axis direction to approximately the width of the array of laser diodes.

11. The optical system as claimed in claim 9, wherein said optical system further includes a slow axis diffuser that diffuses illumination from the laser diodes along the slow axis direction.

12. The optical system as claimed in claim 9, wherein said optical system further includes a wave plate that rotates the polarization of illumination from the first anamorphic lens structure.

13. The optical system as claimed in claim 9, wherein said first anamorphic lens structure is adjacent the plurality of laser diodes.

14. The optical system as claimed in claim 9, wherein said optical system provides on-axis illumination of a light modulator.

15. The optical system as claimed in claim 11, wherein said optical system further includes a plurality of prisms adjacent the slow axis diffuser.

16. The optical system as claimed in claim 9, wherein said optical system provides off-axis illumination of a light modulator.

17. The optical system as claimed in claim 16, wherein said optical system further includes a plurality of mirrors for re-directing illumination in the slow axis direction.

18. An optical system for projecting a line of laser illumination, said optical system comprising:
- a plurality of laser diodes arranged in a linear array;
- a first anamorphic lens structure that collimates a fast axis of illumination from the plurality of laser diodes;
- a waveplate that rotates the polarization of illumination from the first anamorphic lens structure;
- a second anamorphic lens structure that scales the fast axis illumination from the waveplate;
- a slow axis diffuser that diffuses illumination from the second anamorphic lens structure.; and
- a rotationally symmetric macro lens group that receives the diffused illumination and provides the line of illumination at a light modulator.

19. The optical system as claimed in claim 18, wherein said optical system further includes a rotationally symmetric macro lens group.

20. The optical system as claimed in claim 18, wherein said optical system provides on-axis illumination of a light modulator.

21. The optical system as claimed in claim 18, wherein said optical system provides off-axis illumination of a light modulator.

22. The optical system as claimed in claim 18, wherein said optical system further includes a plurality of prisms adjacent the slow axis diffuser.

23. The optical system as claimed in claim 18, wherein said optical system further includes a plurality of mirrors for re-directing illumination in a slow axis direction.
